Europäisches Patentamt

European Patent Office

Office européen des brevets

(11) Publication number: **0 047 092**
**B1**

(12) **EUROPEAN PATENT SPECIFICATION**

(45) Date of publication of patent specification: **04.12.85**

(51) Int. Cl.⁴: **B 62 M 9/00**, B 62 K 19/34

(21) Application number: **81303729.8**

(22) Date of filing: **17.08.81**

(54) Gear crank for pedal vehicle.

(30) Priority: **18.08.80 JP 117846/80 u**
**18.08.80 JP 117847/80 u**
**28.12.80 JP 188831/80 u**

(43) Date of publication of application:
**10.03.82 Bulletin 82/10**

(45) Publication of the grant of the patent:
**04.12.85 Bulletin 85/49**

(84) Designated Contracting States:
**BE DE FR GB IT**

(56) References cited:
**EP-A-0 002 903**
**EP-A-0 002 964**
**FR-A-2 337 074**
**US-A-3 550 465**
**US-A-4 009 621**
**US-A-4 144 773**

(73) Proprietor: **SHIMANO INDUSTRIAL COMPANY**
**LIMITED**
**77, 3-cho Oimatsu-cho Sakai-shi**
**Osaka (JP)**

(72) Inventor: **Shimano, Keizo**
**81, 3-cho Midorigaoka-Minamimachi**
**Sakai-shi Osaka (JP)**

(74) Representative: **Szczuka, Jan Tymoteusz et al**
**Cruikshank & Fairweather 19 Royal Exchange**
**Square**
**Glasgow G1 3AE Scotland (GB)**

Courier Press, Leamington Spa, England.

## Description

This invention relates to a gear crank suitable for use in a pedal vehicle comprising a crank shaft and a pair of crank arms at respective axial ends of said crank shaft and a chain wheel support means with an annular chain wheel thereon, said chain wheel support means having a plurality of radially extending stays.

Chain wheels for cycles and other pedal vehicles are generally provided with a plurality of teeth at their outer periphery and are mounted on the crank shaft via a chain support means for transferring torque during pedalling from the crank arms to the chain wheel through radially extending stays.

Conventional chain wheel support means such as that disclosed in EP—A—0002903, generally have five stays disposed at approximately equal angular intervals. The chain wheel is supported either directly on the stays or possibly on an outer annular portion thereof and has a cross-sectional area throughout its or their circumferential extent greater than the minimum standard area sufficient to safely transmit the maximum torque exerted on the crank arms. In other words, the gear crank usually uses five or more stays and has the aforesaid cross-sectional area because it has generally been considered that the use of less than five stays and a reduced cross-sectional area of the chain wheel and/or outer support means portion would be unsatisfactory from the point of view of strength. As a result the problem is created in that the gear crank as a whole becomes relatively heavy. Although EP—A—0002964 discloses a gear crank with only four stays these are disposed symmetrically at right angles to each other and there is no disclosure of any means for avoiding the abovementioned problems.

In addition the mounting of the gear crank on a cycle with a bottom bracket of the cycle frame supporting a seat tube, a down tube, and a chain stay and extending at one axial end axially outwardly from the mounting portion for both the tubes so as to support the gear crank results in considerable drag during the cycle's running, since air flows tend to strike the leading side of the axial end of the bottom bracket at the chain wheel side thereby to cause turbulence and eddy flows in the region of said leading side, the down tube, and the chain wheel, thereby increasing overall resistance during running of the bicycle and resulting in increased rider fatigue.

It is an object of the present invention to avoid or reduce one or more of the above problems.

The inventor has found that the torque acting on each crank arm during its full revolution by pedalling, decreases to a minimum at the upper and lower dead points of each crank arm and generally increases to a maximum in the approximate region corresponding to displacement of the crank arms by an angle of 70 to 90 degrees from the upper dead point and that an improved gear crank can be provided wherein the support means has two groups each of two stays, said stays of each of said groups being disposed angularly rearwardly of a respective crank arm with respect to the forward driving direction of the gear crank at a rotational angular spacing from an upper dead point thereof and corresponding substantially to exertion of a maximum torque on said crank arms during pedalling in use of said gear crank.

The present invention provides a gear crank suitable for use in a pedal vehicle comprising a crank shaft and a pair of crank arms at respective axial ends of said crank shaft and a chain wheel support means with an annular crank wheel thereon, said chain wheel support means having a plurality of radially extending stays, characterized in that said support means has two groups each of two stays, said stays of each of said groups being disposed angularly rearwardly of a respective crank arm with respect to the forward driving direction of the gear crank with a first stay in each of said groups closest to a respective said crank arm disposed at a rotational angle of from 40 to 60 degrees from said crank arms.

Preferably said chain wheel and/or radially outer portion of the chain wheel support means has a smaller transverse cross-sectional area at first circumferential portions in the region of each of said crank arms than at second circumferential portions interconnecting said stays in each of said groups.

Advantageously a principal plane of each of said stays is twisted with respect to the principal plane of said chain wheel so as to be displaced at its leading edge with respect to the forward driving direction of said gear crank, away from the crank arm adjacent said chain wheel support means, and at its trailing edge, towards said crank arm.

With a gear crank of the present invention the stays are disposed for increased efficiency of torque transmission so that it is possible to reduce the number and possibly the weight thereof and utilize a smaller cross-sectional area of the chain wheel and/or radially outer portion of the chain wheel support means in regions of reduced torque transmission forces whilst preventing breakdown of gear crank due to insufficient strength.

Furthermore, during rotation of a gear crank of the invention which uses 'twisted' stays, during pedalling, there can be obtained an air flow which passes through the chain wheel with an axially outward component of movement, over the inclined leading surfaces of the stays. This air flow introduces an eddy flow created in a space between the leading side of the adjacent axial end of the bottom bracket, the down tube, and the chain wheel, thereby allowing the air to escape readily from the space. As a result there is obtained a rather more streamlined air flow and the drag or the air resistance against the gear crank can be reduced.

Further preferred features and advantages of the invention will appear from the following detailed description given by way of example of a preferred embodiment illustrated with reference to the accompanying drawings in which:

Fig. 1 is a partially sectioned front elevation of a gear crank of the invention in use on a bicycle;

Fig. 2 is a side elevation of the gear crank of Fig. 1;

Figs. 3 and 4 are transverse cross-sectional detail views on an enlarged scale, on the lines III—III and IV—IV in Fig. 2, of different circumferential portions of the chain wheel and associated support means;

Fig. 5 is a partially sectioned plan view of the gear crank of Fig. 1;

Fig. 6 is a transverse cross-sectional view of a crank arm of the gear crank of Fig. 1; and

Fig. 7 is a graph showing the relationship between an angular rotational displacement of the crank arms and the torque acting thereon.

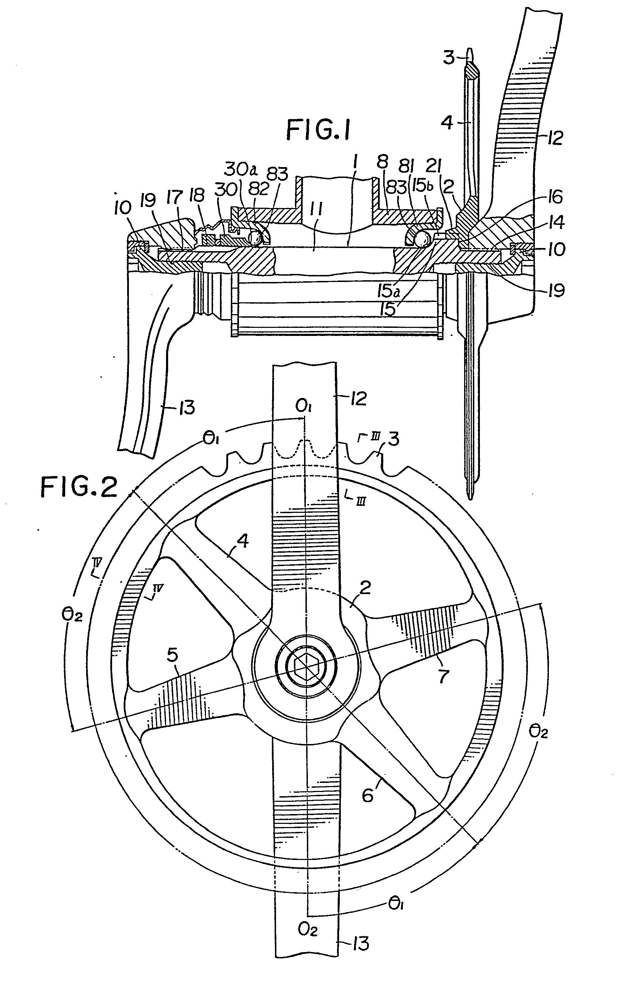

A gear crank of the invention, as shown in Fig. 1, comprises a crank 1, a chain wheel support means 2 with radially extending stays 4—7 supporting a radially outward annular portion with an integrally formed chain wheel 3 thereon. The crank 1 comprises a crank shaft 11 and a pair of crank arms 12 and 13 secured to both axial ends thereof. The crank shaft 11 is provided at its outer periphery at one axial end with an axially outwardly tapering mounting portion 14 with a plurality of splines and with a larger diameter portion 15 having a ball race 15a. Between the mounting portion 14 and the larger diameter portion 15 is a stepped portion 16, and at the outer periphery of the other axial end is provided a tapered mounting portion 17 also having a plurality of splines and a screwthreaded portion 18, the crank arms 12 and 13 being supported on respective ones of said mounting portions 14 and 17. A ball holder 30 having a ball race 30a is screwthreadedly engaged with the screwthreaded portion 18, and the crank shaft 11 is provided at the centre of its end faces with screwthreaded bores 19, engaged by headed bolts 10 to hold the crank arms 12 and 13 non-rotatably on said crank shaft 11. The larger diameter portion 15 is provided at its outer periphery with a plurality of splines 15b on which the chain wheel support means 2 is mounted.

The support means 2 has at the outer periphery of a central boss thereof, four said stays 4, 5, 6 and 7, in two groups each of two stays, and is provided in the vicinity of said boss with a mounting portion 21 having a plurality of splines engageable with the splines 15b, for non-rotatable mounting of the support means 2 on the crank shaft 11. The boss of the support means 2 is fixedly sandwiched between the stepped portion 16 and the crank arm 12 inserted on the respective mounting portion 14, so that a torque exerted during pedalling is transmitted to the chain wheel 3 through the crank arms 12 and 13, crank shaft 11, and each of the stays 4, 5, 6 and 7 of the support means 2.

As may be seen in Fig. 2, each group of two stays 4, 5 and 6, 7, is disposed rearwardly of a respective crank arm 12 and 13 with respect to the forward driving direction of the gear crank—clockwise as viewed in Fig. 2. First said stays 4 and 6 disposed closest the crank arms 12 and 13 are disposed at a rotational angular separation therefrom of from 40 to 60 degrees therefrom i.e. from the upper dead point $O_1$ and from the lower dead point $O_2$ as shown, respectively. The other, second, stays 5 and 7 are disposed at rotational angles $\theta_2$ of from 50 to 70 degrees to from respective ones of said first stays 4 and 6. Thus, as will be made clearer below, the stays 4 and 5, or 6 and 7 in each group corresponding to a respective crank arm 12 or 13 are disposed at an angular position corresponding to exertion of maximum torque on the crank arms 12, 13 following travel of the crank arms through the upper dead point $O_1$.

The chain wheel 3 is formed integrally with the radially outward portion of the support means but could if desired be formed separately therefrom, being for example screwthreadedly mounted directly on said stays or on an angular outward portion of the chain support means interconnecting the radially outer ends of the stays.

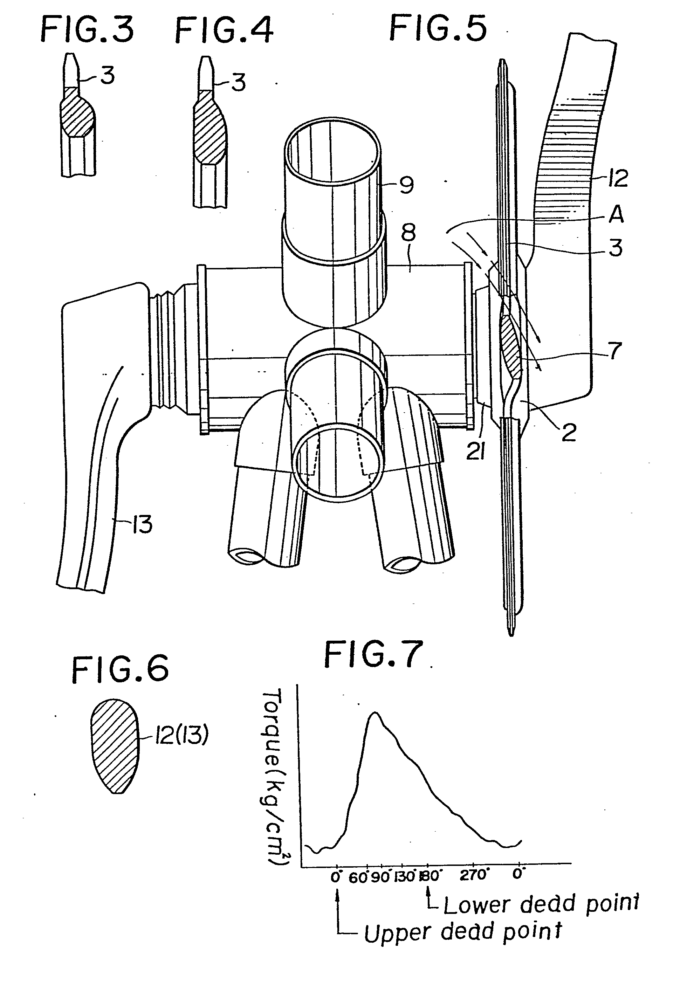

The radially inward portion of the chain wheel 3 and/or any associated radially outward annular portion of the chain support means can be formed to have a reduced transverse cross-sectional diameter at first circumferential portions in the region of the crank arms 12, 13 (see Fig. 3) as compared with second circumferential portions interconnecting the stays of each said group 4, 5 and 6, 7 and in proximity thereto. In the case of the present embodiment this corresponds to a larger internal diameter of the chain wheel and outer support means portion 3 in the region of the crank arms 12, 13 than that between the stays 4 and 5 and 6 and 7, thus reducing the overall weight of the chain wheel 3 and support means 2. Alternatively, instead of reducing the dimensions at said first circumferential portions and/or in addition, the dimensions could be reduced in the axial direction.

Also shown in Fig. 1 is a bottom bracket 8, and cup-form bearing means 81 and 82 screwthreadedly secured at respective axial ends of the bottom bracket 8, the crank shaft 11 being rotatably supported in the bottom bracket 8 through balls 83 interposed between the ball races of the bearing means 81 and 82 and the ball race 15a of the crank shaft 11 and the ball race 30a of the ball holder 30.

In the above described gear crank, when one of the crank arms 12 is positioned at the upper dead point $O_1$ and the other 13 at the lower dead point $O_2$ during pedalling, the first circumferential portions of smaller cross-sectional area of the chain wheel 3 and outer support means portion in the regions of the upper and lower dead points $O_1$, $O_2$ of the crank arms 12 and 13 are subjected to a smaller torque and the second circumferential portions of larger cross-sectional area are positioned in regions away from the dead points at which the torque becomes larger.

One crank arm 12, when pedalled during riding of a cycle, passes the upper dead point $O_1$ and then through a further angle of from 40 to 60 degrees from the upper dead point $O_1$, until the first stay 4 in the respective group corresponding to said crank arm 12 and nearest said crank arm 12, is positioned at the upper dead point $O_1$. When the crank arm 12 then travels still further through the angular rotation region of from 90 to 130 degrees with respect to the upper dead point $O_1$, until the second stay 5 further away from said crank arm 12 reaches the upper dead point $O_1$. The stays 6 and 7 of the other group associated with the other crank arm 13 also pass through a similar sequence as the other crank arm 13 passes the upper dead point $O_1$.

As may be seen from Fig. 7, each group of stays 4 and 5 or 6 and 7 is positioned in a region such that when the adjacent portion of the chain wheel 3 is transmitting maximum load to the drive chain, maximum torque is being exerted on the crank arms 12, 13. Thus the maximum torque acts on the second circumferential portions of the chain wheel and support means i.e. at the portions with the larger transverse cross-sectional area, in other words on the strongest portions provided with maximum support from the stays. Thus in accordance with the present invention it is possible to provide the necessary strength to avoid the risk of failure of the chain wheel support means and chain wheel in use thereof with only four stays and with reduced cross-sectional area and thus weight in certain selected parts of the chain wheel and/or support means.

In the gear crank shown in Fig. 5, the respective stays 4 to 7 are made oblong in transverse cross section with opposed longer sides and opposed, generally arcuate, shorter sides, and taper radially outwardly in the plane of the chain wheel and/or in the axial direction, the longer sides being generally parallel to the plane of the chain wheel. The above described stays 4 to 7 have their principal planes twisted with respect to the principal plane of the chain wheel 3 so that the leading edge of each stay 4, 5, 6 or 7 is displaced away from the adjacent crank arm 12 and the trailing edge is displaced towards said crank arm 12 whilst the leading side is inclined to extend obliquely with respect to the forward direction of travel. Thus, an air flow striking the front of each stay 4, 5, 6 or 7 while the crank arms 12 and 13 are revolving, is guided over the inclined leading surface of each stay generally axially outwardly of the chain wheel 3, so that it passes through the chain gear 3 and escapes generally axially and obliquely outwardly therefrom. As a result, no eddy flow is created in a region $A$ between the leading side of the adjacent axial end of the bottom bracket 8 on the chain wheel 3 side, the down tube 9 and the chain wheel 3.

Thus, the air flow escapes from the region $A$ axially outwardly of the chain gear 3 through the above-described inclined stays more readily thereby reducing air resistance and drag against the gear crank and improving the high speed running of the cycle.

As shown in Fig. 6, the crank arms 12 and 13 are generally streamlined in transverse cross section with the leading edge rounded and the opposed sides thereof tapering progressively towards the trailing edge thereby further reducing air resistance and drag against the crank arms 12 and 13 of the gear crank.

**Claims**

1. A gear crank suitable for use in a pedal vehicle comprising a crank shaft (11) and a pair of crank arms (12, 13) at respective axial ends of said crank shaft (11) and a chain wheel support means (2) with an annular chain wheel (3) thereon, said chain wheel support means (2) having a plurality of radially extending stays (4—7), characterized in that said support means (2) has two groups each of two stays (4, 5 and 6, 7), said stays of each of said groups being disposed angularly rearwardly of a respective crank arm (12, 13) with respect to the forward driving direction of the gear crank with a first stay (4, 6) in each of said groups closest to a respective said crank arm (12, 13), disposed at a rotational angular spacing $(\theta)_1$ of from 40 to 60 degrees from said crank arm (12, 13).

2. A gear crank according to Claim 1, wherein a second stay (5, 7) in each of said groups is disposed at an angular spacing from the respective first stay (4, 6) at an angle of from 50 to 60 degrees.

3. A gear crank according to claim 1 or claim 2, wherein said chain wheel support means includes a radially outward annular portion having a smaller transverse cross-sectional area at first circumferential portions in the region of each of said crank arms (12, 13) than at second circumferential portions interconnecting said stays (4—7) in each of said groups.

4. A gear crank according to Claim 3 wherein the chain wheel (3) is formed integrally with said chain wheel support means (2, 4—7).

5. A gear crank according to any one of Claims 1 to 4, wherein a principal plane of each of said stays is twisted about its longitudinal axis and with respect to the principal plane of said chain wheel (3) so as to be displaced at its leading edge with respect to the foward driving direction of said gear crank, away from the crank arm (12) adjacent said chain wheel support means, and at its trailing edge, towards said crank arm (12).

6. A gear crank according to any one of Claims 1 to 5, wherein each of said stays (4—7) is oblong in transverse cross section with opposed longer sides and opposed, generally arcuate, shorter sides, said longer sides extending in generally the same direction as the chain wheel (3).

7. A gear crank according to Claim 6, wherein each of said stays (4—7) is tapered in a radially outward direction, at least on said opposed longer, transverse cross-section, sides.

8. A gear crank according to any one of Claims 1 to 7, wherein each of said crank arms (12, 13) has a generally streamlined transverse cross section with a rounded leading edge and tapering rearwardly towards its trailing edge.

9. A gear crank according to any one of Claims 1 to 8, wherein said chain wheel has a smaller transverse cross-sectional area at first circumferential portions in the region of each of said crank arms (12, 13) than at second circumferential portions between said stays (4—7) in each of said groups.

**Revendications**

1. Pédalier convenant pour l'utilisation dans un véhicule à pédales, qui comprend un arbre de pédalier (11) et une paire de bras de manivelle (12, 13) aux extrémités axiales respectives de l'arbre de pédalier (11) et des moyens de maintien (2) de pignon de chaîne portant un pignon annulaire (3) de chaîne, les moyens de maintien (2) de pignon de chaîne comprenant une pluralité d'entretoises radiales (4—7), caractérisé en ce que les moyens de maintien (2) comprennant deux groupes de deux entretoises chacun (4, 5 et 6, 7), les entretoises de chacun des groupes étant disposées angulairement vers l'arrière d'un bras de manivelle respectif (12, 13), avec référence au sens d'entraînement du pédalier vers l'avant, une première entretoise (4, 6) dans chacun des groupes, qui est la plus proche d'un bras de manivelle respectif (12, 13), étant située à une distance angulaire de rotation $(\theta_1)$ de 40 à 60 degrés par rapport au bras de manivelle (12, 13).

2. Pédalier suivant la revendication 1, dans lequel une deuxième entretoise (5, 7) dans chacun des groupes est disposée à une distance angulaire de la première entretoise respective (4, 6), d'un angle de 50 à 60 degrés.

3. Pédalier suivant la revendication 1 ou la revendication 2, dans lequel les moyens de maintien de pignon de chaîne comprennent une partie annulaire radialement extérieure ayant une section transversale plus petite dans des premières parties circonférentielles, dans la région de chacun des bras de manivelle (12, 13), que dans des deuxièmes parties circonférentielles interconnectant les entretoises (4—7) dans chacun des groupes.

4. Pédalier suivant la revendication 3, dans lequel le pignon de chaîne (3) est formé solidairement avec les moyens de maintien (2, 4—7) de pignon de chaîne.

5. Pédalier suivant l'une quelconque des revendications 1 à 4, dans lequel un plan principal de chacune des entretoises est tordu autour de son axe longitudinal et par rapport au plan principal du pignon de chaîne (3), de façon à ce que son bord avant, avec référence au sens d'entraînement du pédalier vers l'avant, soit éloigné du bras de manivelle (12) près des moyens de maintien de pignon de chaîne et à ce que son bord arrière soit rapproché du bras de manivelle (12).

6. Pédalier suivant l'une quelconque des revendications 1 à 5, dans lequel chacune des entretoises (4—7) a une section transversale oblongue, avec des côtés opposés plus longs et de côtés opposés plus courts, sensiblement courbes, les dits côtés plus longs s'étendant sensiblement dans la même direction que le pignon de chaîne (3).

7. Pédalier suivant la revendication 6, dans lequel chacune des entretoises (4—7) s'amincit dans une direction radialement vers l'extérieur, au moins sur les dits côtés opposés plus longs de la section transversale.

8. Pédalier suivant l'une quelconque des revendications 1 à 7, dans lequel chacun des bras de manivelle (12, 13) a une section transversale sensiblement aérodynamique, avec un bord avant arrondi et des côtés convergeant vers l'arrière, vers son bord arrière.

9. Pédalier suivant l'une quelconque des revendications 1 à 8, dans lequel le pignon de chaîne a une section transversale plus petite dans des premières parties circonférentielles, dans la région de chacun des bras de manivelle (12, 13), que dans des deuxièmes parties circonférentialles entre les entretoises (4—7) de chacun des groupes.

**Patentansprüche**

1. Tretlager für Tretfahrzeuge bestehend aus einer Tretlagerachse (11) und zwei Tretrahmen (12, 13), an den jeweiligen Enden der Tretlagerachse (11) und einer Kettenradhalterung (2), mit einem ringförmigen Kettenrad (3), wobei die Kettenradhalterung mehrere radiale Speichen (4 bis 7) aufweist, dadurch gekennzeichnet, daß die Halterung (2) zwei Gruppen von jeweils zwei Speichen (4, 5 und 6, 7) aufweist wobei die Speichen jeder Gruppe winkelmäßig hinter einem zugeordneten Tretarm (12, 13) bezogen auf die Vorwärtsantriebsrichtung des Tretlagers angeordnet sind, wobei eine erste, dem jeweiligen Tretarm (12, 13) am nächsten liegende Speiche (4, 6) jeder Gruppe zu diesem in einem Winkelabstand $(\theta)_1$ von 40 bis 60° angeordnet ist.

2. Tretlager nach Anspruch 1, dadurch gekennzeichnet, daß eine zweite Speiche (5, 6) jeder der Gruppen zur jeweils ersten Speiche (4, 6) in einem Winkelabstand von 50 bis 60° angeordnet ist.

3. Tretlager nach Anspruch 1 oder 2, dadurch gekennzeichnet, daß die Kettenradhalterung einen radialen äußeren Ring aufweist, der in ersten Teilen im Bereich jedes Tretarms (12, 13) einen kleineren Querschnitt als in zweiten, die Speichen (4 bis 7) jeder Gruppe verbindenden Teilen aufweist.

4. Tretlager nach Anspruch 3, dadurch gekennzeichnet, daß das Kettenrad (3) einstückig mit der Kettenradhalterung (2, 4, 7) ausgebildet ist.

5. Tretlager nach jedem der Ansprüche 1 bis 4, dadurch gekennzeichnet, daß eine Hauptebene jeder Speiche um ihre Längsachse und zur Hauptebene des Kettenrades (3) derarts verdreht ist, daß sie mit ihrer bezüglich der Vorwärtsantriebsrichtung des Tretlagers vorderen Kante von dem der Kettenradhalterung benachbarten Tretarm (12) weg und mit ihrer Hinterkante zum Tretarm (12) hin versetzt ist.

6. Tretlager nach jedem der Ansprüche 1 bis 5, dadurch gekennzeichnet, daß jede der Speichen (4 bis 7) einen länglichen Querschnitt mit einander gegenüberliegenden längeren Seiten und einander gegenüberliegenden, allgemein bogenförmigen, kürzeren Seiten aufweist, wobei die längeren Seiten im wesentlichen in der gleichen Richtung wie das Kettenrad (3) verlaufen.

7. Tretlager nach Anspruch 6, dadurch gekennzeichnet, daß die Speichen (4 bis 7) wenigstens an den einander gegenüberliegenden, längeren Seiten des Querschnitts in radialer Richtung nach außen hin schmaler werden.

8. Tretlager nach jedem der Ansprüche 1 bis 7, dadurch gekennzeichnet, daß jeder der Tretarme (12, 13) einen im wesentlichen stromlinienförmigen Querschnitt mit abgerundeter Vorderkante und zur hinteren Kante hin schmaler werdenden Querschnitt aufweist.

9. Tretlager nach jedem der Ansprüche 1 bis 8, dadurch gekennzeichnet, daß das Kettenrad in ersten Umfangsbereichen im Bereich jedes Tretarms einen kleineren Querschnitt als in zweiten Umfangsbereichen zwischen den Speichen (4 bis 7) jeder Gruppe aufweist.

# FIG.1

# FIG.2

# FIG.3    FIG.4          FIG.5

3

3

# FIG.6          FIG.7

12(13)

Torque(kg/cm²)

0° 60° 90° 130° 180°    270°    0°

⌐ Lower dead point

⌐ Upper dead point

2